Europäisches Patentamt

(19) European Patent Office

Office européen des brevets

(11) Publication number: **0 118 185**
**B1**

# (12) EUROPEAN PATENT SPECIFICATION

(45) Date of publication of the patent specification:
**11.03.87**

(51) Int. Cl.⁴: **G 02 B 6/30**, G 02 B 6/28,
G 02 B 6/12

(21) Application number: **84300502.6**

(22) Date of filing: **26.01.84**

(54) Integrated optical circuit device.

(30) Priority: **04.02.83 JP 17240/83**

(43) Date of publication of application:
**12.09.84 Bulletin 84/37**

(45) Publication of the grant of the patent:
**11.03.87 Bulletin 87/11**

(84) Designated Contracting States:
**DE FR GB NL**

(56) References cited:
**DE - A - 2 205 728**
**DE - A - 2 619 269**
**GB - A - 1 407 544**
**US - A - 4 152 044**

**ELECTRONICS LETTERS, vol. 12, no. 16, 1976, H.P. HSU et al. "Flip-chip approach to endfire coupling between single-mode optical fibres and channel waveguides", pages 404, 405**
**JAPANESE JOURNAL OF APPLIED PHYSICS, vol. 19, no. 1, 1980, Tokyo, T. KAMBAYASH et al. "Chemical etching of InP and GaInAsP for fabricating laser diodes and integrated optical circuits", pages 79-85**

(73) Proprietor: **SUMITOMO ELECTRIC INDUSTRIES LIMITED, No. 15, Kitahama 5-chome Higashi-ku, Osaka-shi Osaka 541 (JP)**

(72) Inventor: **Yoshida, Ken-ichi Osaka Works of Sumitomo, Electric Industries Ltd. 1-3 Shimaya 1-chome, Konohana-ku Osaka (JP)**
Inventor: **Nishiwaki, Yoshikazu Osaka Works of Sumitomo, Electric Industries Ltd. 1-3, Shimaya 1-chome, Konohana-ku Osaka (JP)**

(74) Representative: **Rackham, Stephen Neil et al, GILL JENNINGS & EVERY 53-64 Chancery Lane, London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an integrated optical circuit device and, more particularly, to a device the production cost of which can be reduced.

Coupling optical fibres directly to a substrate in an integrated optical circuit is disclosed in each of an article by H.P. Hsu and A.F. Milton, entitled «single-mode coupling between fibres and indif-fused waveguides», IEEE Journal of Quantum Electronics, Vol. QE-13, No. 4, pp. 224–233, April, 1977 and an article by O.G. Ramer, C. Nelson, and C. Mohr, entitled «Experimental Integrated Optic Circuit Losses and Fibre Pigtailing of Chips», IEEE Journal of Quantum Electronics, vol. QE-17, No. 6, June, 1981, pp. 970–974.

These articles describe devices in which integrated single mode waveguides typically having a width of the order of tens of microns and separated by a similar distance to enable them to operate effectively are coupled to optical fibres having a typical external diameter of 125 μm. To achieve this the waveguides include bends and splay apart from one another so that they are typically separated by approximately 125 μm. To reduce the propagation loss through the bent portions of the integrated waveguides the bends must be shallow and this, in turn, necessitates a longer length of waveguide and hence longer substrate on which the waveguides are integrated. Usually the substrates must be made from single crystal material and large sizes increase the cost disproportionally.

According to this invention an integrated optical circuit device comprising a first substrate on which a plurality of first waveguides are formed to provide an integrated optical function block, the distance between adjacent waveguides being smaller than the outside diameter of opital fibres to be coupled to the device, is characterized in that the device includes a further substrate in which a receptacle or recess is provided in which the first substrate is received, the further substrate including a plurality of further waveguides which are formed thereon in such a manner that the ends of said further waveguides adjacent the first substrate are arranged so as to be coupled with waveguides, respective ones of the first while the other ends of said further waveguides remote from the first substrate are separated by a distance greater than the outside diameter of the optical fibres, so as to enable said other ends of said further waveguides to be coupled to said optical fibres.

Particular embodiments of devices in accordance with this invention will now be described and contrasted with the prior art with reference to the accompaning drawings; in which: –

Figure 1 is a perspective view of a conventional optical function device;

Figure 2 is a plan view of a conventional optical function device coupled to external optical fibres;

Figure 3 is a perspective view of another conventional optical function device;

Figure 4 is a perspective view of an embodiment of the integrated optical circuit device in accordance with the present invention; and,

Figure 5 is a plan view of another embodiment of an integrated optical circuit device in accordance with the present invention.

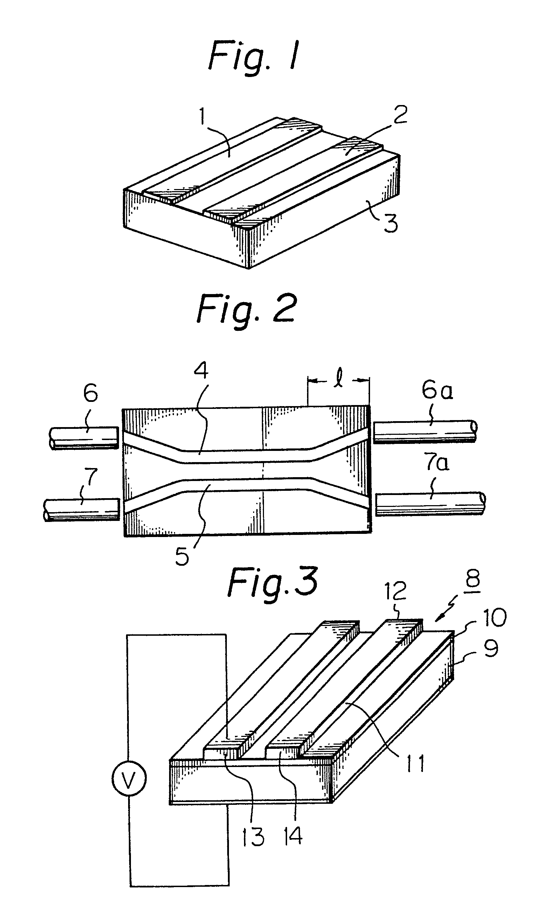

A typical example of conventional waveguide-type optical functional device is shown in Figure 1. As shown, this optical function device utilizes the phenomenon of directional coupling between two waveguides 1 and 2. Therefore if a material having an electro-optic effect is used as a substrate 3, the optical function device can be a switching device or a modulation device by changing the voltage applied to the waveguides 1 and 2, and controlling the phase constant. The waveguides 1 and 2 are of a single mode type having the width of the order of several to several tens μm, and the distance between them is similar. On the other hand, in the case where said optical functional device is used as a switching device in an optical fibre communication system, it is impossible to couple a pair of the optical fibres directly to ends of the waveguides 1 and 2 of the optical functional device shown in Figure 1 because the typical outside diameter of an optical fibre is 125 μm and thus the ends of adjacent waveguides are too close together. Accordingly, it has been a general practice to provide bends in the integrated waveguides 4 and 5 as shown in Figure 2 and to extend them such that the distance between ends of the waveguides 4 and 5 is approximately equal to the outside diameter of optical fibres 6, 6a, 7 and 7a, to enable the optical fibres to be directly coupled to the ends of the waveguides.

However, this conventional method has disadvantages as follows:

1. The optical function device thus produced becomes inevitably high in price for the following reason. That is, the smaller the radius of curvature of the bent waveguides the larger the propagation loss becomes. Therefore, the larger radius of curvature of minimize the propagation loss necessi-tates a larger length $l$ of the waveguides 4 and 5 to secure a sufficiently large distance between the waveguides (see Figure 2) and this fact, coupled with the fact that materials having electro-optical effect used to form a switching device, such as single crystals of InP, GaAs or $Bi_{12}SiO_{20}$ are gen-erally high in price, results in a rise in price of the optical functional devices of this kind.

2. As a result, the optical function device thus produced becomes large in size. This involves technical difficulties. For example, in the case where the waveguides 4 and 5 are produced by epitaxial growth, it is difficult to obtain a uniform epitaxial layer over a large area.

In an integrated optic circuit in which optical functional devices such as laser diodes LD, photo diodes PD, modulators, multiplexers and so forth are integrated on a single substrate, the distance between the waveguides becomes smaller as the degree of integration becomes higher. On the other hand, an optical fibre is standardized to have an outside diameter of 125 µm. Therefore, it is physically impossible to couple a plurality of pieces of optical fibres to an integrated optic circuit having a plurality of waveguides with a small distance therebetween. Figure 3 shows an optical switching device which is an optical functional device of this kind. As shown in Figure 3, in the switching device which is an optical functional device 8 of this example, an n-InGaAsP as a guide layer 10 and p-InP or p-InGaAsP as a clad layer on which an electrode layer 12 is formed are fabricated on an n-InP substrate by epitaxial growth, and, thereafter, etching them in the construction shown in Figure 3 to form strip-loaded type waveguides 13 and 14. In this case, if the distance between the waveguides 13 and 14 is made smaller, there occurs the phenomenon of directional coupling in which a light incident to one waveguide 13 couples into the other waveguide 14. The complete coupling length, that is the distance required for the 100% coupling of the energy, becomes smaller as the distance between the waveguides 13 and 14 becomes smaller. When an electric field is applied only to one waveguide 13 of a switching device having the length equal to the complete coupling length, the refractive index of the waveguide 13 is changed by the electrooptic effect of InP, to thereby generate a differential phase constant $\Delta\beta$ between the waveguides 13 and 14. When a voltage V equal to

$$\Delta\beta = \sqrt{\frac{3\pi}{L}} \quad \text{(L: complete coupling length) is ap-}$$

plied, the energy of the light once coupled to the other waveguide 14 is returned to the waveguide 13. That is, switching is accomplished by controlling the applied voltage V.

In this case, it is essential that the waveguides 13 and 14 are single-mode guides. For this reason, each of the width and thickness of the waveguides is of the order of several µm. Further, in order to make the complete coupling length (length of device) on the order of several mm, it is essential that the distance between the waveguides 13 and 14 is on the order of several µm. Accordingly, it is physically impossible to couple optical fibers having the outside diameter of 125 µm directly to the waveguides 13 and 14, respectively. For this reason, it was the conventional practice to form the bent waveguides 4 and 5 as shown in Fig. 2. This, however, was not free from the disadvantages described hereinabove.

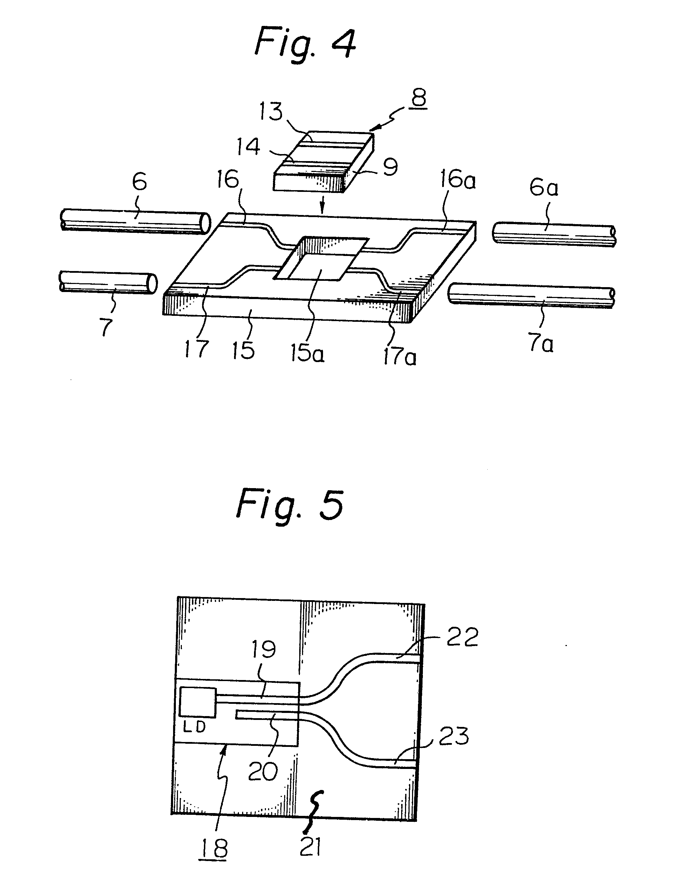

In the present invention, the bent portions of the waveguides 4 and 5 shown in Fig. 2 are formed using another substrate material which is low in cost and on which it is easy to make the waveguides. That is, as shown in Fig. 4, a substrate 15 is provided with a receptacle 15a which is a recess formed by etching for receiving an optical functional device 8 which is a switching device, and said substrate 15 is formed thereon with waveguides 16, 16a and 17, 17a one endes of which are coupled with the optical functional device 8 while the other ends of which are coupled to the optical fibers 6, 6a and 7, 7a. The distance between the waveguides 16, 16a and 17, 17a is made smaller toward the optical functional device 8 from the ends opposite to the optical fibers 6, 6a and 7, 7a. A single crystal material of, for example, GaAs, InP, Si, $Bi_{12}SO_2$, $LiNbO_3$ and so forth can be used as the substrate 9 of the optical functional device 8. In the case where a compound semiconducter such as GaAs, InP and so forth is used, LED, PD, FET and so forth can be integrated thereon. If $LiNbO_3$ is used as the substrate 9 on which Ti is coated in the pattern of the waveguides and heat-treated in the neighborhood of 1000 °C for four to five hours, the optical functional device 8 can be a directional coupling device comprising the waveguides 13 and 14 in which Ti is diffused. Further, if GaAs is used as the substrate 9 on which $Ga_xAl_{1-x}AS$ is coated by epitaxial growth changing the value of x, and the upper layer $Ga_{x'}Al_{1-x'}As$ of $Ga_xAl_{1-x}As$ and $Ga_{x'}Al_{1-x'}As$ (where $x' > x$) coated on the GaAs substrate sequentially by epitaxial growth is etched to form the waveguides 13 and 14, the optical functional device 8 can be a directional coupling device. Further, if InP is used as the substrate 9 on which $In_xG_{1-x}A_yP_{1-y}$ is coated by epitaxial growth changing the values of x and y, and the upper layer $In_{x'}G_{1-x'}A_yP_{1-y'}$ of $In_xG_{1-x}A_yP_{1-y}$ and $IN_{x'}G_{1-x'}A_yP_{1-y'}$ (where $x' > x, y' > y$) coated on the InP substrate by epitaxial growth sequentially is etched to form the waveguides 13 and 14, the optical functional device 8 can be a directional coupling device. Still further, if pyrex glass is used as the substrate 15 the upper surface of which except the receptacle 15a and the waveguides 16, 16a, 17 and 17a is masked by gold and the substrate 15 is heated in a solution consisting of 85% $KNO_3$ and 15% $TINO_3$ at 400–500 °C for diffusion, the waveguides 16, 16a, 17 and 17a can be formed thereon. The groove of the receptacle 15a is etched preferably by chemical etching of hydrogen fluoride.

Fig. 5 shows an example in which laser diodes are integrated. The optical functional device 18 shown in Fig. 5 is a transmitter for switching the output of the LD to waveguides 19 and 20. A substrate 21 has said waveguides 19 and 20 coupled thereto forming waveguides 22 and 23 widening toward the end thereof opposite the optical functional device.

The substrates 15 and 21 and the waveguides 16, 16a, 17, 17a, 22 and 23 may be formed by coating a quartz substrate with Ge-doped $Sio_2$ by CVD and etching it.

As described above with reference to preferred embodiments, according to the present invention having its technical thought based on a hybrid integrated optic circuit using two or more kinds of substrates, it is made possible to produce an integrated optic circuit having a sufficient distance between waveguides to be coupled with optical fibres.

**Claims**

1. An integrated optical circuit device comprising a first substrate (9) on which a plurality of first waveguides (13, 14, 19, 20) are formed to provide an integrated optical function block(8, 18), the distance between adjacent waveguides (13, 14, 19, 20) being smaller than the outside diameter of optical fibres (6, 6a, 7, 7a) to be coupled to the device, characterized in that the device includes a further substrate (15, 21) in which a receptacle or recess (15a) is provided in which the first substrate (9) is received, the further substrate including a plurality of further waveguides (16, 16a, 17, 17a, 22, 23) which are formed thereon in such a manner that the ends of said further waveguides (16, 16a, 17, 17a, 22, 23) adjacent the first substrate (9) are arranged so as to be coupled with respectives ones of the first waveguides (13, 14, 19, 20), while the other ends of said further waveguides (16, 16a, 17, 17a, 22, 23) remote from the first substrate (9) are separated by a distance greater than the outside diameter of the optical fibres so as to enable said other ends of said further waveguides (16, 16a, 17, 17a, 22, 23) to be coupled to said optical fibres (6, 6a, 7, 7a).

2. An integrated optical circuit device according to claim 1, in which $LiNbO_3$ is used as material for the first substrate (9) on which the optical function block is integrated, and in which the first waveguides (13, 14) are obtainable by coating the first substrate (9) with Ti in the required shape for said first waveguides (13, 14) and heat-treating the first substrate at a temperature of 1000 °C for four to five hours to diffuse the Ti into the first substrate, the first waveguides (13, 14) forming a directional coupling device.

3. An integrated optical circuit device according to claim 1, in which GaAs is used as material for the first substrate (9) on which the optical function block is integrated, and in which the first waveguides (13, 14) are obtainable by coating the first substrate (9) with a graduated layer of $Ga_xAl_{1-x}As$ by epitaxial growth with the value of x varying with depth and then defining the first waveguides (13, 14) by etching, the first waveguides (13, 14) forming a directional coupling device.

4. An integrated optical circuit device according to claim 1, in which InP is used as material for the first substrate (9) on which the optical function block is integrated, and in which the waveguides (13, 14) are obtainable by coating the first substrate (9) with a graduated layer of $In_xG_{1-x}A_yP_{1-y}$ by epitaxial growth with the values of x and y varying with depth and then defining the first waveguides (13, 14) by etching, the first waveguides (13, 14) forming a directional coupling device.

5. An integrated optical circuit device according to any one of the preceding claims, in which pyrex glass is used as material for the further substrate (15, 21), and in which the further waveguides (16, 16a, 17, 17a, 22, 23) are obtainable by masking the upper surface of the further substrate (15, 21) except in the receptacle (15a) and where the further waveguides (16, 16a, 17, 17a, 22, 23) are to be formed, and then heating it in a solution of $KNO_3$ 85% and $T/NO_3$ 15%.

6. An integrated optical circuit device according to any one of the preceding claims, in which the receptacle (15a) is obtainable by chemical etching with HF.

**Patentansprüche**

1. Vorrichtung für integrierte optische Schaltungen mit einem ersten Substrat (9), auf dem mehrere erste Wellenleiter (13, 14, 19, 20) ausgebildet sind, um einen integrierten optischen Funktionsblock (8, 18) zu bilden, wobei der Abstand zwischen benachbarten Wellenleitern (13, 14, 19, 20) kleiner ist als der Aussendurchmesser von optischen Fasern (6, 6a, 7, 7a), die mit der Vorrichtung gekoppelt werden, dadurch gekennzeichnet, dass die Vorrichtung ein weiteres Substrat (15, 21) aufweist, in dem eine Aufnahme oder Aussparung (15a) ausgebildet ist, in die das erste Substrat (9) aufgenommen wird, und dass das weitere Substrat mehrere weitere Wellenleiter (16, 16a, 17, 17a, 22, 23) aufweist, die auf dem Substrat derart ausgebildet sind, dass die Enden dieser weiteren Wellenleiter (16, 16a, 17, 17a, 22, 23) nahe dem ersten Substrat (9) so angeordnet sind, dass sie mit den jeweils zugehörigen ersten Wellenleitern (13, 14, 19, 20) gekoppelt sind, während die anderen Enden der weiteren Wellenleiter (16, 16a, 17, 17a, 22, 23), die von dem ersten Substrat (9) entfernt sind, voneinander einen Abstand haben, der grösser als der Aussendurchmesser der optischen Fasern ist, so dass diese Enden der weiteren Wellenleiter (16, 16a, 17, 17a, 22, 23) mit den optischen Fasern (6, 6a, 7, 7a) gekoppelt werden können.

2. Vorrichtung nach Anspruch 1, dadurch gekennzeichnet, dass als Material für das erste Substrat (9), auf dem der optische Funktionsblock integriert ist, $LiNbO_3$ verwendet ist und dass die ersten Wellenleiter (13, 14) durch Beschichten des ersten Substrats (9) mit Ti in der erforderlichen Form für die ersten Wellenleiter (13, 14) und Wärmebehandlung des ersten Substrats bei einer Temperatur von 1000 °C über eine Zeitdauer von 4 bis 5 Stunden hergestellt ist, wodurch das Ti in das erste Substrat hineindiffundiert, wobei die ersten Wellenleiter (13, 14) eine Richtungskopplungseinrichtung bilden.

3. Vorrichtung nach Anspruch 1, dadurch gekennzeichnet, dass GaAs als Material für das erste Substrat (9), auf dem der optische Funktionsblock integriert ist, verwendet ist und dass die ersten Wellenleiter (13, 14) durch Beschichten des ersten Substrats (9) mit einer abgestuften Schicht von $Ga_xAl_{1-x}As$ mit epitaxialer Zunahme mit dem Wert von x, der mit der Tiefe variiert, und anschliessender Begrenzung der ersten Wellenleiter (13, 14) durch Ätzen hergestellt sind, wobei die ersten Wellenleiter (13, 14) eine Richtungskopplungseinrichtung bilden.

4. Vorrichtung nach Anspruch 1, dadurch gekennzeichnet, dass als Material für das erste Substrat (9), auf dem der optische Funktionsblock integriert ist, InP verwendet ist und dass die Wellenleiter (13, 14) durch Beschichten des ersten Substrats (9) mit einer abgestuften Schicht von $In_xG_{1-x}A_yP_{1-y}$ mit epitaxialer Zunahme mit dem Wert von x und y, die mit der Tiefe variieren, und anschliessender Begrenzung der ersten Wellenleiter (13, 14) durch Ätzen hergestellt sind, wobei die ersten Wellenleiter (13, 14) eine Richtungskopplungseinrichtung bilden.

5. Vorrichtung nach einem der vorhergehenden Ansprüche, dadurch gekennzeichnet, dass Pyrexglas als Material für das weitere Substrat (15, 21) verwendet ist und dass die weiteren Wellenleiter (16, 16a, 17, 17a, 22, 23) durch Abdecken der oberen Fläche des weiteren Substrats (15, 21) mit Ausnahme der Aufnahme (15a) und dem Bereich, wo die weiteren Wellenleiter (16, 16a, 17, 17a, 22, 23) auszubilden sind, und anschliessendem Erhitzen in einer Lösung von $KNO_3$ 85% und $TlNO_3$ 15% hergestellt sind.

6. Vorrichtung nach einem der vorhergehenden Ansprüche, dadurch gekennzeichnet, dass die Aufnahme (15a) durch chemisches Ätzen mit HF hergestellt ist.

**Revendications:**

1. Dispositif pour circuits intégré optiques comprenant un premier substrat (9) sur lequel sont formés un certain nombre de premiers guides d'ondes (13, 14, 19, 20) pour produire un bloc intégré à fonction optique (8, 18), la distance entre des guides d'ondes adjacents (13, 14, 19, 20) étant plus petite que le diamètre externe des fibres optiques (6, 6a, 7, 7a) à coupler au dispositif, caractérisé en ce que le dispositif comprend un autre substrat (15, 21) dans lequel est formé un réceptable ou évidement (15a) où le premier substrat (9) est reçu, l'autre substrat comprenant un certain nombre d'autres guides d'ondes (16, 16a, 17, 17a, 22, 23) qui y sont formés de manière que les extrémités des autres guides d'ondes (16, 16a, 17, 17a, 22, 23) à proximité dudit premier substrat (9) soient agencées afin d'être couplées à certains respectifs des premiers guides d'ondes (13, 14, 19, 20) tandis que les autres extrémités desdits autres guides d'ondes (16, 16a, 17, 17a, 22, 23) éloignées du premier substrat (9) sont séparées d'une distance supérieure au diamètre externe des fibres optiques afin de permettre auxdites autres extrémités desdits autres guides d'ondes (16, 16a, 17, 17a, 22, 23) d'être couplées auxdites fibres optiques (6, 6a, 7, 7a).

2. Dispositif pour circuits optiques intégrés selon la revendication 1 où $LiNbO_3$ est utilisé comme matériau du premier substrat (9) où est intégré le bloc à fonction optique et où les premiers guides d'ondes (13, 14) peuvent être obtenus en enduisant le premier substrat (9) de Ti à la forme requise pour lesdits premiers guides d'ondes (13, 14) et en traitant thermiquement le premier substrat à une température de 1000 °C pendant quatre à cinq heures pour diffuser Ti dans le premier substrat, les premiers guides d'ondes (13, 14) formant un dispositif de couplage directionnel.

3. Dispositif pour circuits optiques intégrés selon la revendication 1 où GaAs est utilisé comme matériau pour le premier substrat (9) sur lequel est intégré le bloc à fonction optique et où les premiers guides d'ondes (13, 14) peuvent être obtenus en enduisant le premier substrat (9) d'une couche graduée de $Ga_xAl_{1-x}As$ par croissance épitaxiale avec la valeur de x variant avec la profondeur puis en définissant les premiers guides d'ondes (13, 14) par attaque, les premiers guides d'ondes (13, 14) formant un dispositif de couplage directionnel.

4. Dispositif pour circuit optique intégré selon la revendication 1 où InP est utilisé comme matériau pour le premier substrat (9) sur lequel est intégré le bloc à fonction optique, et où les guides d'ondes (13, 14) peuvent être obtenus en enduisant le premier substrat (9) d'une couche graduée de $In_xG_{1-x}A_yP_{1-y}$ par croissance épitaxiale avec les valeurs de x et y variant avec la profondeur puis en définissant les premier guides d'ondes (13, 14) par attaque, les premiers guides d'ondes (13, 14) formant un dispositif de couplage directionnel.

5. Dispositif pour circuit optique intégré selon l'une quelconque des revendications précédentes où du verre Pyrex est utilisé comme matériau pour l'autre substrat (15, 21) et où les autres guides d'ondes (16, 16a, 17, 17a, 22, 23) peuvent être obtenus en masquant la surface supérieure dudit autre substrat (15, 21) sauf dans le réceptable (15a) et où les autres guides d'ondes (16, 16a, 17, 17a, 22, 23) doivent être formés et ensuite en chauffant dans une solution de 85% de $KNO_3$ et 15% de $TlNO_3$.

6. Dispositif pour circuits optiques intégrés selon l'une quelconque des revendications précédentes où le réceptable (15a) peut être obtenu par attaque chimique avec HF.

## Fig. 1

## Fig. 2

## Fig.3

2/2

# Fig. 4

# Fig. 5